# EUROPEAN PATENT APPLICATION

(11) **EP 2 385 526 A1**
(43) Date of publication of application: **09.11.2011**
(21) Application number: 10731174.8
(22) Date of filing: 18.01.2010
(51) Int. Cl.: G11B 7/24, G11B 7/007

(54) **OPTICAL INFORMATION RECORDING MEDIUM AND DEVICE FOR RECORDING/REPRODUCING INFORMATION ON/FROM OPTICAL INFORMATION RECORDING MEDIUM**

(30) Priority: 16.01.2009 JP 2009008256; 18.01.2010 JP 2010008057
(71) Applicant: Sharp Kabushiki Kaisha, Osaka-shi, Osaka 545-8522 (JP)
(72) Inventor: TAJIMA, Hideharu, Osaka-shi, Osaka 545-8522 (JP); MAEDA, Shigemi, Osaka-shi, Osaka 545-8522 (JP); ADACHI, Yoshihisa, Osaka-shi, Osaka 545-8522 (JP); HAYASHI, Tetsuya, Osaka-shi, Osaka 545-8522 (JP); ETOH, Atsushi, Osaka-shi, Osaka 545-8522 (JP); OKUMURA, Tetsuya, Osaka-shi, Osaka 545-8522 (JP); NAKANO, Ikuo, Osaka-shi, Osaka 545-8522 (JP); ARIMOTO, Takashi, Osaka-shi, Osaka 545-8522 (JP); IWATA, Noboru, Osaka-shi, Osaka 545-8522 (JP)
(74) Representative: Müller - Hoffmann & Partner
(86) International application number: PCT/JP2010/000238
(87) International publication number: WO 2010/082505

(57) **Abstract**

An optical information recording medium (1) includes, on a substrate (50), a ROM layer (20), a RE layer (40), an intermediate layer (30) separating the ROM layer (20) and the RE layer (40), and a cover layer (10) provided in a position farthest from the substrate (50). The RE layer (40) is an information recording layer provided in a position farthest from the light transmitting layer and also is a recording layer of disc type identification information and an individual identification number recorded in a format allowing easier determination as compared to an information recording format used in the layer allowing only readout of information by use of light irradiation.

Therefore, it becomes easy to check a disc type in a recording/reproducing device and one recording/reproducing device can be shared with other types of optical disks. Further, disk production becomes easy. In addition, it becomes possible to obtain an optical information recording medium that makes it possible to replace outdated data in the ROM layer by recording, in the RE layer, updated data obtained at the time when net connection can be established.

## Description

### Technical Field

The present invention relates to an optical information recording medium, and a device for recording/ reproducing information on/from the optical information recording medium.

### Background Art

Currently, there is a demand for combination discs (discs where multi-layer optical discs each including a ROM (Read Only Memory) layer and a RE (Rewritable) layer are mixedly present). The reason for this is as follows, for example. In car navigation software, internet connection cannot be always established and it takes time for downloading all map information. Accordingly, the car navigation software is desirably distributed in the form of a low-cost ROM. Meanwhile, the map information changes daily and therefore, it is desirable that the map information can be updated via the internet. Accordingly, there have arisen a demand for a combination disc that can make it possible to replace outdated data on a ROM layer by recording, on the RE layer, updated data obtained while the internet connection is being made and that also can solve both the above problems.

For obtaining the combination discs, it has been considered preferable to provide a ROM layer having a higher reflectance than a RE layer, as described in Patent Literature 1. This is because a loss occurs, due to the presence of other information recording layer, in light returning from an information recording layer (hereinafter, referred to as an L0 layer) that is provided in the farthest position from a reproduction light entrance surface.

Further, in one standard of optical discs, there are a plurality of kinds of optical discs such as ROM, R, RW, and RE and various versions (disc types) in one of which, for example, two information recording layers are provided for increasing a record capacity. For example, on assumption that such combination discs are used for car navigation software as described above, it is desirable that, at the time when a recording/ reproducing device is not used for the car navigation software, this recording/reproducing device can reproduce information from rent movie software (ROM) or a disc (R, RW, RE) in which a drama is recorded at home. Therefore, in the recording/ reproducing device, it is required to have means to identify a disc type as easily as possible when a disc is loaded.

As the means for identifying the disc type, a system in which a barcode is printed in a region outside an information recording area is possible. However, for the reason described later, it is more desirable to record information after the disc has been completed and in a manner such that correction is not possible after addition of the information. Accordingly, substantially, recording onto a disc by use of light irradiation, like BCA (Burst cutting area) recording (recording information by irradiating an information recording layer with pulse laser light by YAG laser or the like and thereby forming stripes (like a barcode) having, for example, a width of approximately 10 µn and a length of several hundred µm), is desirable.

Patent Literature 1 discloses a combination disc including a transparent substrate, a RE layer, an intermediate layer, a ROM layer, and a protective resin layer provided in this order from a reproduction light entrance surface.

As disclosed in Patent Literature 1, for attaining a combination disc, it is preferable in general to provide a ROM layer that has a higher reflectance than a RE layer. This is because damage occurs, due to the presence of other information recording layer, in light returning from an information recording layer (L0) that is provided in the farthest position from the reproduction light entrance surface.

Further, Non-Patent Literature discloses a method as a method for identifying a disc type. In the method, information (BCA) is recorded in the form of a record mark whose size allows the identification of the disc type even in a case where a value of a beam expander and/or a focusing or tracking state are not optimum.

### Citation List

### [Patent Literature]

[Patent Literature 1]
   Japanese Patent Application Publication, Tokukaihei, No. 9-106546 (Publication Date: April 22, 1997)
[Non-Patent Literature]
[Non-Patent Literature 1]
   (Standard ECMA-267, -382, -384)

### Summary of Invention

### Technical Problem

However, according to a technique disclosed in Non-Patent Literature (DVD standard), there has been a problem such that a position where BCA recording is carried out varies depending on a disc type. For example, a DVD-ROM is provided in an information recording layer provided to a substrate that is farthest from a light entrance surface. Meanwhile, two layers of DVD-R and DVD-RW are provided in an information recording layer provided to a substrate that is close to the light entrance surface. That is, in the recording/reproducing device, a layer where a BCA is provided in the disc cannot be set in advance and accordingly, in a case where reproduction of information in the BCA is to be reproduced, it has been required to carry out focusing search to some extent.

Further, in a combination disc in which a ROM layer is provided in an information recording layer (L0) provided in a position that is farthest from a reproduction light entrance surface as disclosed in Patent Literature 1, there has been a problem such that BCA recording onto a layer that is farthest from the reproduction light entrance surface is difficult for a reason described later.

In a multi-layer disc in the form of a BD (Blu-ray Disc: registered trademark) whose capacity can be more easily increased as compared to a DVD type disc, a layer onto which information is recorded is a single-plate optical disc. Therefore, an information recording layer is always provided on a substrate.

This is for the following reason. In a multi-plate optical disc like a DVD in which two substrates are bonded to each other, difference in cost or the like does not occur depending on a substrate surface on which the information recording layer is provided. However, in a single-plate optical disc, for arranging the information recording layer to have two layers, it is required to provide an intermediate layer on the information recording layer provided to the substrate and further provide a new information recording layer. Accordingly, in the case of a single-plate optical disc, in view of cost, it is substantially impossible to provide an intermediate layer without providing the information recording layer on the substrate.

That is, according to a BD type optical disc standard, an information recording layer is always provided on the substrate. Accordingly, a recording/reproducing device for reproducing information recorded on the information recording layer can easily predict a location where the information is recorded and can carry out in advance setting for BCA reproduction. This makes it easier to share one recording/ reproducing device (including only recognition of a disc type) among various types of media that comply with one standard.

However, for realizing what is mentioned above, the combination disc disclosed in Patent Literature 1 had a problem in the following points.

First, it is desirable that BCA recording (recording information by irradiating an information recording layer with pulse laser light by YAG laser or the like and forming stripes (like a barcode) each having a width of approximately 10 µm and a length of several hundred µm, for example) is carried out in a specific position so that reproduction becomes easy. Further, in the case of a BD format, it is desirable that recording is carried out in a position of L0 for a reason described later.

Further, in BCA recording, it is preferable in view of cost to simultaneously record individual identification number of a disc that is capable of preventing improper dubbing or the like onto a RE layer.

Further, in a case where such an individual identification number is recorded, it is desirable in view of production management to carry out the recording after the disc has been completed. That is, substantially, it is required to carry out the BCA recording after a disc has been completed.

Though explained later in detail, in BCA recording, a laser output required at recording on a ROM layer significantly differs from a laser output required at recording on a RE layer. This is because, in the case of the recording on the RE layer, a state of a recording mark should be changed in phase at recording from a crystalline state to an amorphous state as in a case where normal information recording is carried out. However, in the case of the recording on the ROM layer, generally, only a metal reflective layer is provided in view of cost. Therefore, the phase cannot be changed. Accordingly, recording is carried out as if by burning out the metal layer, and on this account, laser having a greater output is required.

Meanwhile, in a dual-layer RE disc, when BCA recording is carried out on L0, a change in phase may occur at least in a RE layer (L1) right above L0 due to heat caused by high output laser transmitting into the L0 layer.

Accordingly, in a combination disc in which at least the L0 layer is a ROM layer, the L0 layer is provided in a position farthest from the light entrance surface, among an information recording layer. Therefore, in BCA recording, beam always passes through other information recording layer. As a result, the beam passes through a RE layer that is always present in any one layer of other information recording layer through which the beam passes. Though described in detail later, in such a case, because the RE layer absorbs light more easily as compared to the ROM layer, a temperature of the RE layer increases. This results in a phenomenon in which due to heat in the increase in temperature of the RE layer, a cover layer and the RE layer are peeled off from each other. When this phenomenon occurs, focusing onto the L0 layer becomes impossible. Consequently, information recorded on the L0 layer by BCA recording cannot be properly reproduced.

The present invention is attained in view of the above problem. An object of the present invention is to provide an optical information recording medium that can share a recording/reproducing device with other various kinds of media (media that are different in R, RE, and R and/or the number of layers) according to one standard, which optical information recording medium can distribute a large capacity of information at a low cost and which optical information recording medium makes it possible to update information at any time by updated data, and a device for recording/reproducing information on/from the optical information recording medium.

### Solution to Problem

In order to solve the above problem, an optical information recording medium of the present invention includes a substrate: a plurality of information recording layers from which information can be read out by reproduction light; an intermediate layer for separating each of the plurality of information recording layers; and a light transmitting layer provided in a position farthest from the substrate, the plurality of information recording layers including a layer allowing only readout of information and a rewritable layer including an area where information is rewritable, the rewritable layer including an area where information is rewritable, being an information recording layer provided in a position farthest from the light transmitting layer and also being a recording layer of disc type identification information and an individual identification number recorded in a format allowing easier determination as compared to an information recording format used for the layer allowing only readout of information by use of light irradiation.

Here, the disc type identification information is information for identifying a disc type. In other words, the disk type identification information shows the number of information recording layers provided in a disc, and/or types (ROM, R, RE, etc.) of information recording layers provided in the disc. The disk type identification information also shows locations of a layer allowing only readout of the information (hereinafter, referred to as a ROM layer) and a rewritable layer including an area in which the information is rewritable, among the plurality of information recording layers. Further, the disc type identification information is information for identifying types of the optical information recording medium.

The individual identification number is a number for identifying an individual of the optical information recording medium. The individual identification number is preferably recorded on the optical information recording medium at the time when BAC recording is carried out. By using the individual identification number as appropriate, it is possible to prevent improper dubbing onto an RE layer or the like.

According to the above configuration, the disc type identification information and the individual identification information are recorded in an information recording layer (hereinafter, referred to as an L0 layer) provided in a position farthest from the light transmitting layer.

Accordingly, it becomes possible to set in advance, in a reproducing device for reproducing the disc type identification information and the individual identification information, which layer among the plurality of information recording layers the disc type identification information and the individual identification information are recorded on. This makes it possible to shorten a time for causing the reproducing device to specify the layer on which the disc type identification information and the individual identification information are recorded among the plurality of information recording layers. Further, it becomes easy to share one reproducing device among optical information recording media of various disc types.

Furthermore, according to the above configuration, the information recording layer provided in the position farthest from the light transmitting layer is a RE layer. That is, according to the above configuration, the RE layer is disposed as the L0 layer.

Therefore, it becomes possible to prevent peeling-off of the RE layer for BCA recording in the ROM layer from the intermediate layer, the transparent layer, or the like that is provided above or below the RE layer at the time when BCA information is recorded, which peeling-off occurs in a case where the ROM layer is provided as the L0 layer. As a result, it is possible to cause a reproducing device or the like to properly reproduce the disc type identification information, the individual identification information, and/or the like which been subjected to BCA recording onto the L0 layer.

In this way, according to the above configuration, on a disk that is a BD-format multi-layer disc whose record capacity can be more easily increased as compared to the DVD type and also is a combination disc, there are disc type identification information and an individual identification number (information recorded in BCA recording) recorded in a format that can be more easily determined as compared to an information recording format used by a user for the information recording layer (L0) that is far from a light entrance surface. In addition, in the configuration, the RE layer is provided.

According to the above configuration, a disc type can be easily checked in the recording/reproducing device. This makes it possible to share one recording/reproducing device with other types of optical discs. Further, production of the disc becomes easy. In addition, it also becomes possible to obtain an optical information recording medium in which outdated data on the ROM layer can be replaced by recording, on the RE layer, updated data obtained at the time when internet connection can be established.

### Advantageous Effects of Invention

As described above, an optical information recording medium of the present invention includes a substrate: a plurality of information recording layers from which information can be read out by reproduction light; an intermediate layer for separating each of the plurality of information recording layers; and a light transmitting layer provided in a position farthest from the substrate, the plurality of information recording layers including a layer allowing only readout of information and a rewritable layer including an area where information is rewritable, the rewritable layer including an area where information is rewritable, being an information recording layer provided in a position farthest from the light transmitting layer and also being a recording layer of disc type identification information and an individual identification number recorded in a format allowing easier determination as compared to an information recording format used for the layer allowing only readout of information by use of light irradiation.

Therefore, a disc type can be easily checked in the recording/reproducing device. This makes it possible to share one recording/reproducing device with other types of optical discs. Further, production of the disc becomes easy. In addition, it also becomes possible to obtain an optical information recording medium in which outdated data on the ROM layer can be replaced by recording, on the RE layer, updated data obtained at the time when net connection can be established.

### Brief Description of Drawings

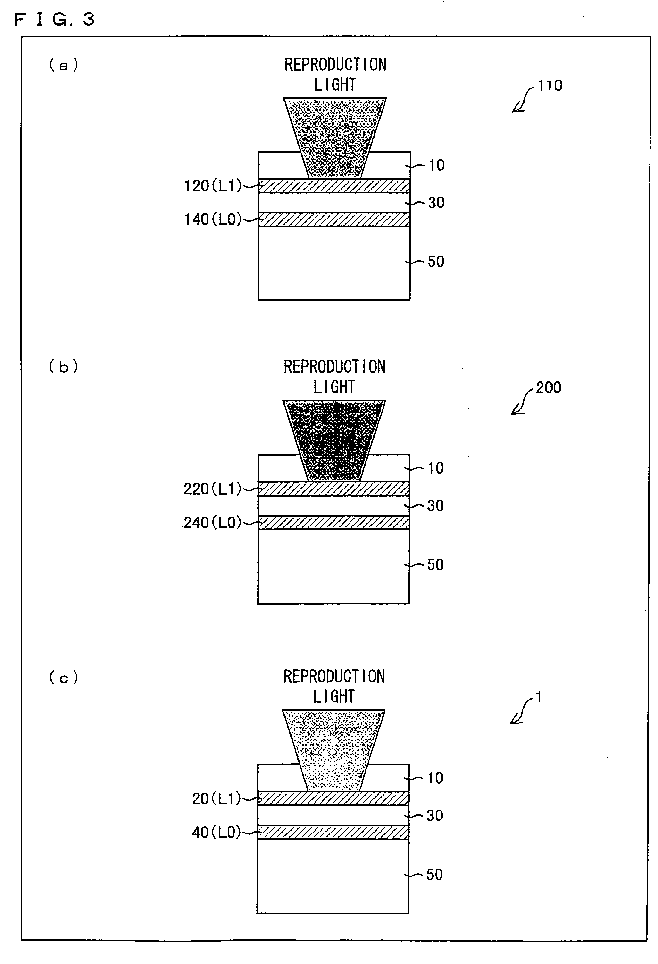

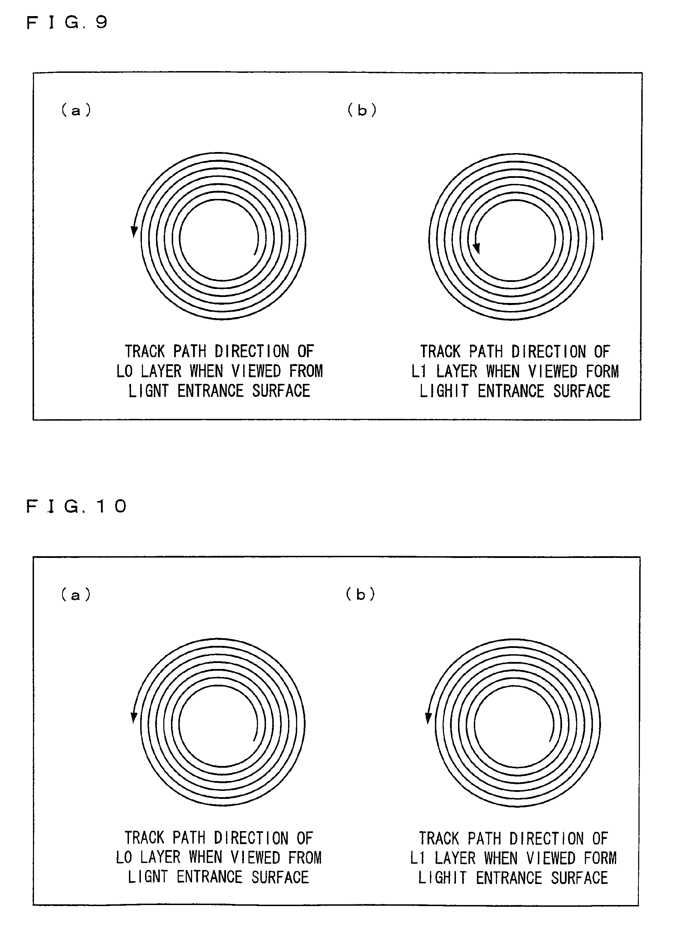

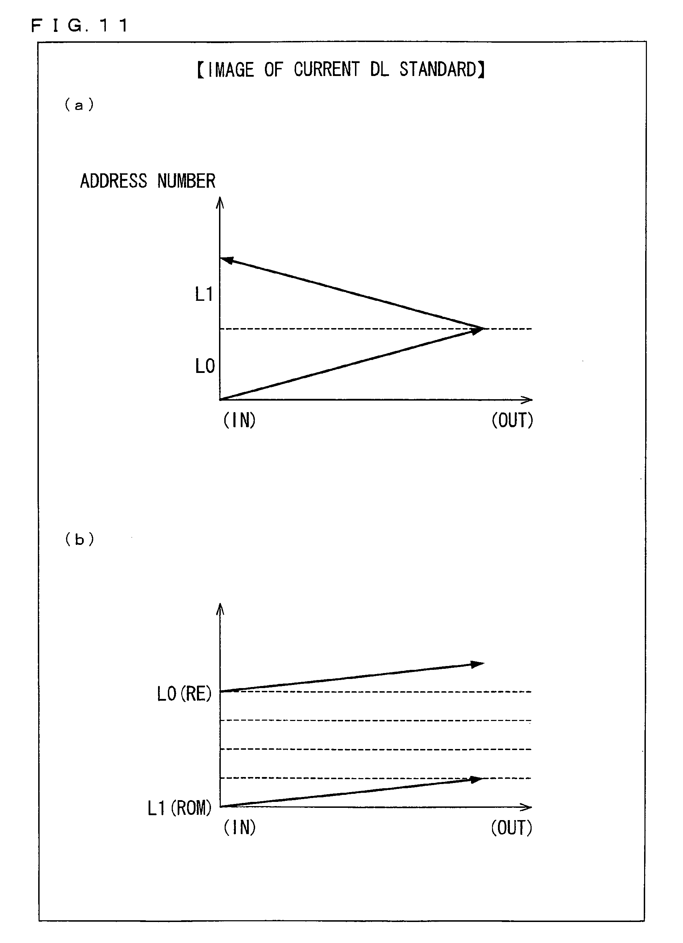

Fig. 1

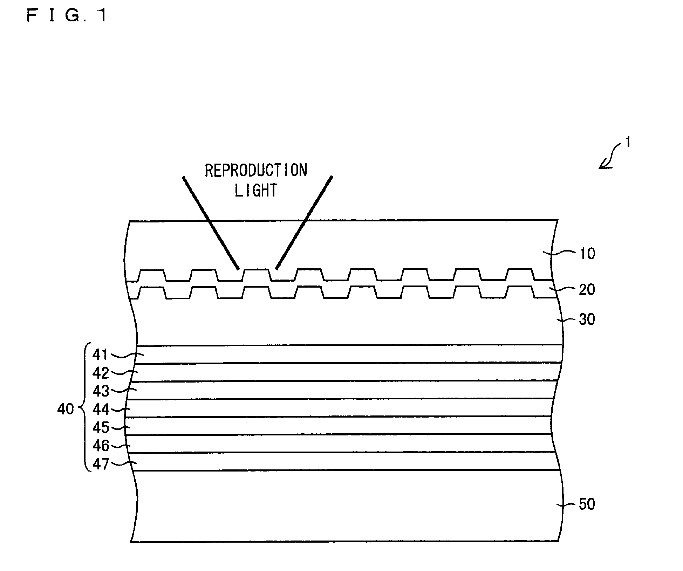

   Fig. 1 is a schematic diagram illustrating a configuration of an optical information recording medium of the present invention.
Fig. 2

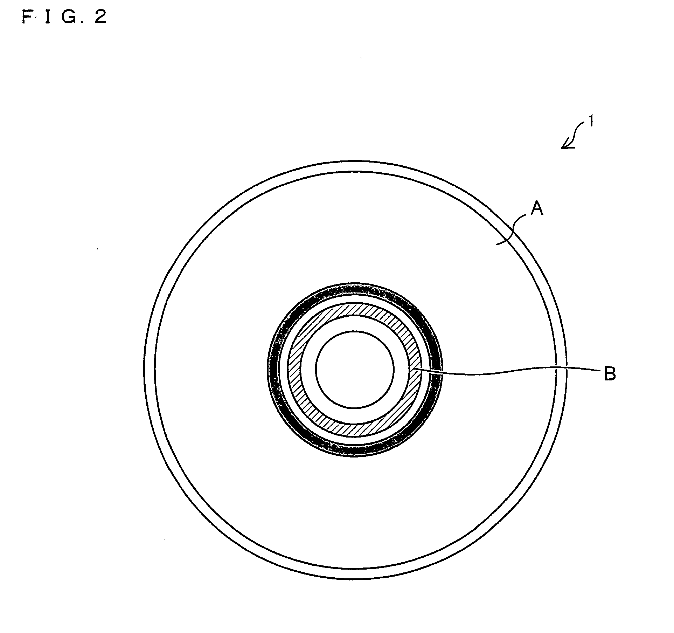

   Fig. 2 is a plan view illustrating a configuration of an optical information recording medium of the present invention.
Fig. 3
   (a) of Fig. 3 is a schematic diagram illustrating a configuration of an optical information recording medium having an L0 layer and an L1 layer each made of a ROM layer. (b) of Fig. 3 is a schematic diagram illustrating a configuration of an optical information recording medium having an L0 layer and an L1 layer each made of a RE layer. (c) of Fig. 3 is a schematic diagram illustrating a configuration of an optical information recording medium having an L0 layer made of a RE layer and an L1 layer made of a ROM layer.
Fig. 4

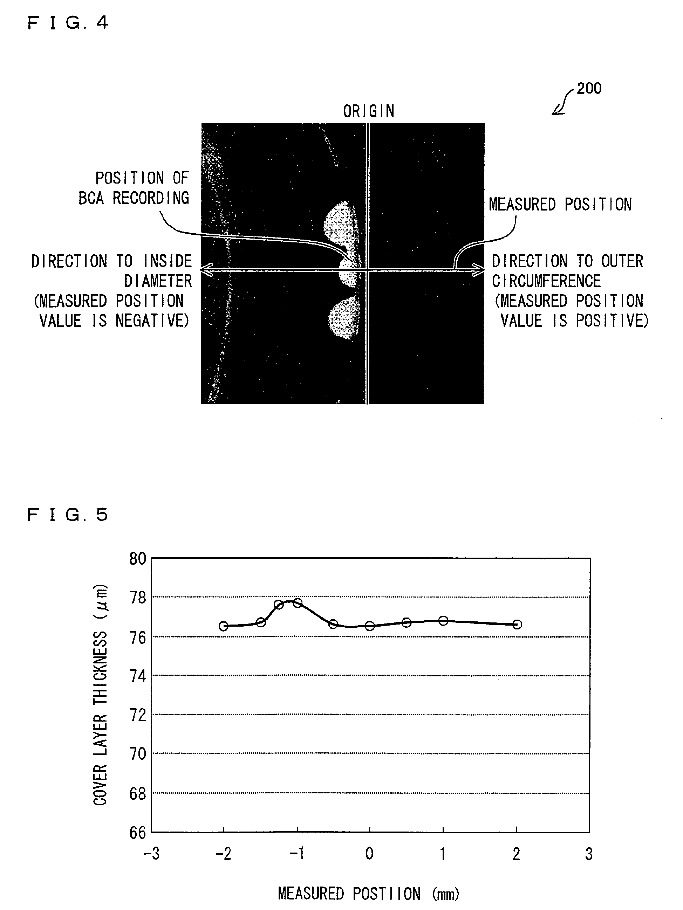

   Fig. 4 is an enlarged view of an essential part, illustrating a condition of a surface of a position where BCA recording is carried out with respect to the optical information recording medium shown in (a) of Fig. 3.
Fig. 5
   Fig. 5 is a graph showing a result of measuring a thickness of a cover layer that forms a surface of the optical information recording medium shown in Fig. 4.
Fig. 6

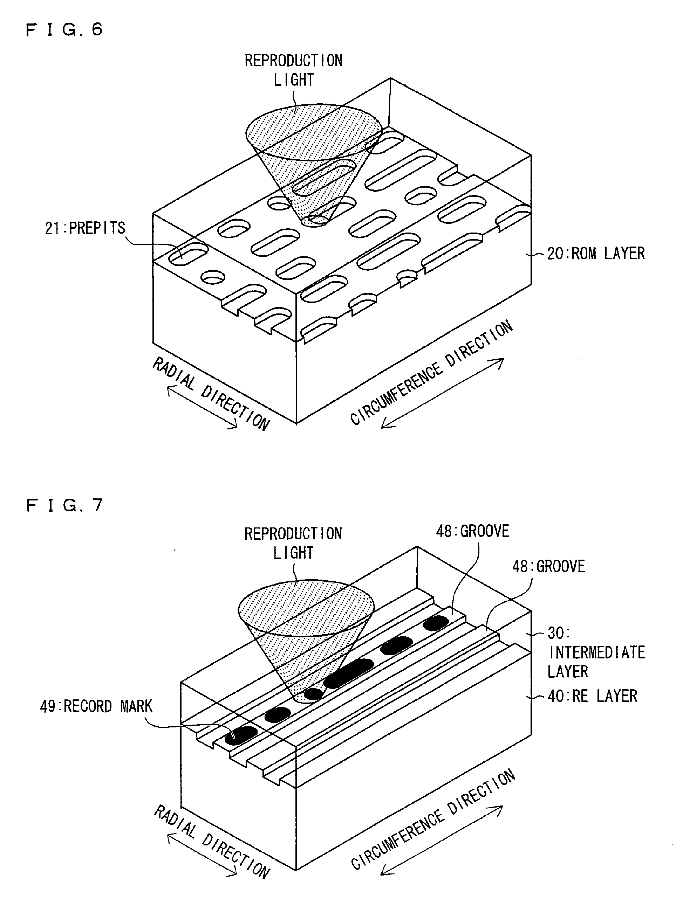

   Fig. 6 is a schematic diagram illustrating a ROM layer in an in-pit recording format.
Fig. 7
   Fig. 7 is a schematic diagram illustrating a RE layer in an on-groove recording format.
Fig. 8

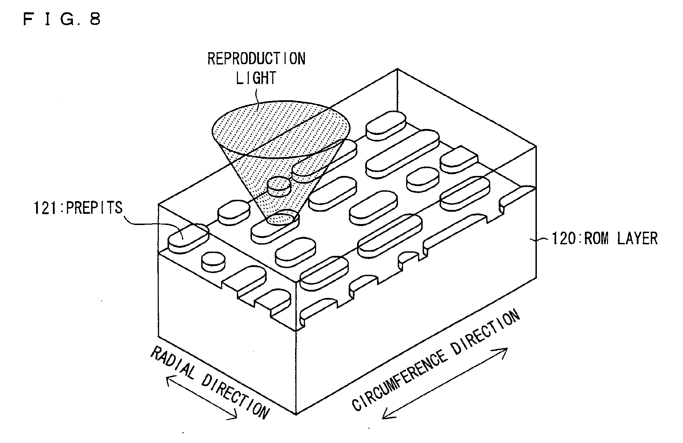

   Fig. 8 is a schematic diagram illustrating a ROM layer in an on-pit recording format.
Fig. 9
   (a) and (b) of Fig. 9 are explanatory diagrams of an opposite track path. (a) is an explanatory diagram showing a tracking path direction of an L0 layer in a case where the L0 layer is viewed from a light entrance surface. (b) is an explanatory diagram showing a tracking path direction of an L1 layer in a case where the L1 layer is viewed from the light entrance surface.
Fig. 10
   (a) and (b) of Fig. 10 are explanatory diagrams of a parallel track path. (a) is an explanatory diagram showing a tracking path direction of an L0 layer in a case where the L0 layer is viewed from a light entrance surface. (b) is an explanatory diagram showing a tracking path direction of an L1 layer in a case where the L1 layer is viewed from the light entrance surface.
Fig. 1
   (a) of Fig. 11 is an explanatory diagram illustrating a state of recording/ reproduction of information in the case of the opposite track path. (b) of Fig. 11 is an explanatory diagram illustrating a state of recording/reproduction of information in the case of the parallel track path.
Fig. 12

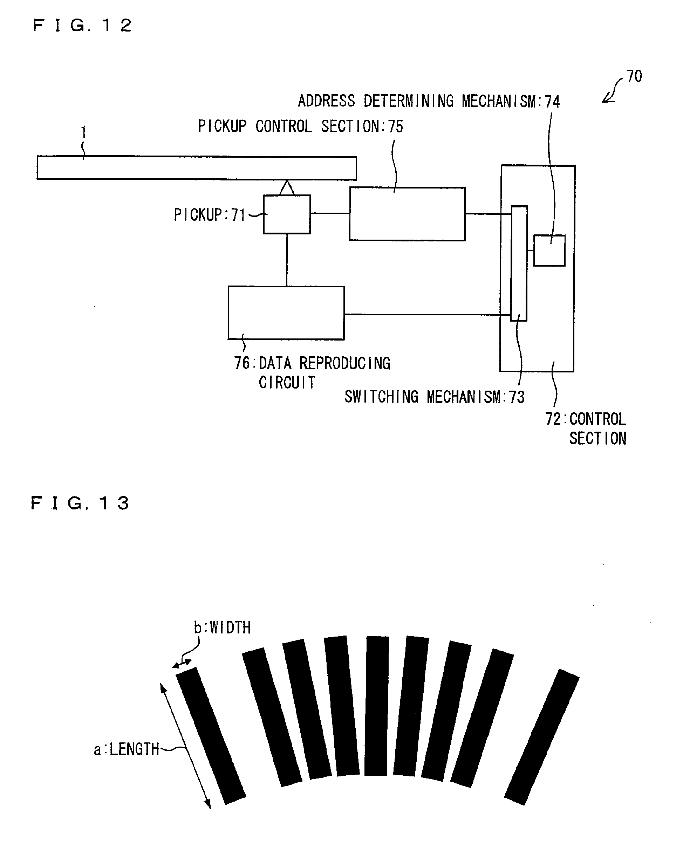

   Fig. 12 is a schematic diagram illustrating a device for recording/reproducing information on/from an optical information recording medium according to one embodiment of the present invention.
Fig. 13
   Fig. 13 is a schematic diagram illustrating one ex ample of a BCA of an optical information recording me dium according to one embodiment of the present inven tion.

### Description of Embodiments

The following describes in detail an embodiment of the present invention.

### (Schematic Configuration of Optical Information Recording Medium 1)

The following explains a configuration of an optical information recording medium 1 according to one embodiment of the present invention.
Fig. 1 is a schematic view illustrating a configuration of the optical information recording medium 1.

As shown in Fig. 1, the optical information recording medium 1 includes, on a substrate 50, a cover layer 10, a ROM layer 20, an intermediate layer 30, and a RE layer 40. The ROM layer 20 and the RE layer 40 are a plurality of information recording layers from which it is possible to read out information by use of reproduction light. The intermediate layer 30 separates the ROM layer 20 and the RE layer 40. The cover layer 10 is provided in a position that is farthest from the substrate 50. A side provided with the cover layer 10 is an entrance side of the reproduction light.

The ROM layer 20 is a layer from which it is possible to only read out information. The RE layer 40 is a rewritable layer including an area where information can be rewritten. The RE layer 40 is an information recording layer provided in a position that is farthest from the cover layer 10. Moreover, the RE layer 40 is a recording layer of disc type identification information and an individual identification number each recorded in a format that can be easily identified in an information recording format used for a layer from which it is possible to only read out information by use of light irradiation.

The cover layer 10 is made of, for example, UV curable resin (a refraction index of 1.50 at a reproduction light wavelength of 405 nm) having a thickness of 75 µm. The cover layer 10 may be made of any material that has a high transmittance at the wavelength of the reproduction light. In other words, the cover layer 10 may be formed from, for example, a polycarbonate film and a transparent adhesive. Further, on a surface of the cover layer 10, a hard coating may be provided for surface protection. Furthermore, the thickness of the cover layer 10 may be changed depending on an optical system which a device (drive device) for reproducing information from an optical information recording medium. More specifically, the cover layer 10 can be a polycarbonate substrate having a thickness of 0.6 mm, for example.

The ROM layer 20 is made of, for example, APC (AgPdCu) having a thickness of 9 nm. This ROM layer 20 is formed on a surface of the intermediate layer 30 by a sputtering method. A thickness and a material of the ROM layer 20 are not limited to the above mentioned thickness and material as long as the thickness and material allows the ROM layer 20 to have a transmittance and a reflectance at a wavelength of reproduction light required for the ROM layer 20.

The intermediate layer 30 is made of, for example, transparent UV curable resin (a refraction index of 1.50 at a reproduction light wavelength) having a thickness of 25 µm. The material of the intermediate layer 30 is not limited to this but may be any material that has a high transmittance at the wavelength of the reproduction light. Further, a thickness of the intermediate layer 30 is not limited to the thickness mentioned above. The thickness may be any appropriate thickness that allows separation of information recording layers (here, the ROM layer 20 and the RE layer 40) and that does not cause a problem of interlayer cross talk. Note that the interlayer cross talk means noise from an information recording layer other than an information recording layer being subjected to reproduction. Moreover, the intermediate layer 30 may have a multi-layer structure. On a surface of this intermediate layer 30 which surface is on a side provided with the ROM layer 20, prepits made of compressions and depressions in accordance with information to be recorded in a specific shape on the ROM layer 20 are provided by a 2P method (photo polymerization method).

The 2P method here is a method in which depressions and protrusions of a master disc is transferred onto a flat plate by filling UV curable resin between the flat plate and the master disc, curing the UV curable resin by irradiating the UV curable resin with a UV ray, and then peeling off the master disc.

The RE layer (L0 layer) 40 is formed by stacking 7 thin-film layers by sputtering, for example. More specifically, these 7 thin-film layers are a first protective film 41 (Zns-SiO₂ having a thickness of 35 nm), a second protective film 42 (ZrO₂ having a thickness of 5 nm), a recording layer 43 (GeTe-Sb₂Te₃ having a thickness of 10 nm), a third protective film 44 (ZrO₂ having a thickness of 5 nm), a fourth protective film 45 (ZnS-SiO₂ having a thickness of 35 nm), a fifth protective film 46 (ZrO₂ having a thickness of 5 nm), a reflective film 47 (APC (AgPdCu) having a thickness of 20 nm) which are provided in this order from a reproduction light entrance side. Note that materials, thickness and the number of layers of the RE layer 40 are not limited to the above-mentioned materials, thickness and the number of layers as long as the RE layer 40 can serve as a RE layer.

The substrate 50 is made of, for example, a polycarbonate disc substrate having a diameter of 120 mm and a thickness of 1.1 mm. This polycarbonate disc substrate has grooves. A material and a thickness of the substrate 50 are not limited to the above described material and thickness, as long as the substrate 50 is provided with grooves on a surface of the substrate 50 and has a predetermined strength of a level at which the substrate 50 can be used as a substrate. More specifically, the substrate 50 may be made of, for example, polyolefin resin or metal. Further, the substrate 50 may have a multi-layer structure.

Fig. 2 is a plan view schematically showing a configuration of the optical information recording medium 1.

Fig. 13 is a schematic diagram illustrating one example of a BCA provided on the optical information recording medium 1.

As shown in Fig. 2, the optical information recording medium 1 includes an area A (content recording area) that is an area for carrying out normal recording/reproduction of information and an area B that is an area for carrying out recording/reproduction of information in the BCA.

The area A is an area for carrying out recording/reproduction of content information or the like that is to be used by a user.

The area B is a BCA recording area for recording BCA information. The area B is provided on an inner circumference side of the optical information recording medium 1. The BCA is provided on the L0 layer right above the substrate 50.

The BCA information is recorded in a format that can be easily identified in an information recording format used for the ROM layer 20. Further, the BCA includes a disc type identification information and an individual identification number. One example of the BCA is shown in Fig. 13. In Fig. 13, an arrow a indicates a length and an arrow b indicates a width.

In the optical information recording medium 1, the disc type identification information and the individual identification information are recorded on the L0 layer that is an information recording layer provided in a position that is farthest from the transparent layer.

Accordingly, it becomes possible to set in advance, in a reproducing device for reproducing the disc type identification information and the individual identification information, which layer the disc type identification information and the individual identification number are recorded on among the plurality of information recording layers. This makes it possible to shorten a time for causing the reproducing device to specify a layer on which the disc type identification information and the individual identification information are recorded among the plurality of information recording layers. Further, it becomes easy to share one reproducing device among optical information recording media of various disc types.

Further, according to the above configuration, the information recording layer that is provided in a position farthest from the cover layer 10 is a RE layer. According to the above configuration, the RE layer 40 is provided as the L0 layer.

In a case where the ROM layer is provided as the L0 layer, an intermediate layer, a transparent layer, and/or the like provided in a layer above or below the RE layer is peeled off from the RE layer in recording the BCA on the ROM layer. The above configuration makes it possible to prevent such peeling-off of the intermediate layer, the transparent layer, and/or the like from the RE layer. This allows a reproducing device or the like to properly reproduce the disc type identification information, the individual identification number, and/or the like that is recorded in the BCA on the L0 layer (which is described in layer in detail).

In this way, the optical information recording medium 1 is a multi-layer disc in a BD format in which a record capacity can be increased more easily as compared to a DVD type. Further, in a combination disc, the optical information recording medium 1 has disc type identification information and an individual identification number recorded on the L0 layer in a format that can be easily identified in an information recording format that is used by a user. In addition, in the combination disc, the optical information recording medium 1 is provided with the RE layer 40.

The above configuration makes it easy to check a disc type in a recording/reproducing device of the optical information recording medium 1. Further, the above configuration makes production of discs easier as well as making it possible to share one recording/ reproducing device with other types of optical discs. In addition, it becomes possible to obtain a combination disc that makes it possible to replace outdated data on the ROM layer by recording, on the RE layer, update data obtained at the time when net connection can be established. Note that the optical information recording medium according to the embodiment of the present invention is not limited to the above described optical information recording medium. The optical information recording medium according to the embodiment of the present invention may be additionally provided with a RE layer and/or a ROM layer, and may have at least three layers. In such a case, each of the cover layer and the intermediate layer may have a thickness different from the thickness described above.

The BCA is formed on the RE layer 40 in the form of stripes each having a width in a unit of µm, by irradiating the RE layer 40 that is the L0 layer with pulse laser light. Because the BCA is made of a stripe having a width in a unit of µm and a length of several hundred µm, the BCA is larger than a prepit formed on the ROM layer 20. Therefore, even when a focus of the reproducing device for reproducing information from the BCA is misaligned in some degree, it is possible to read out information by the reproducing device without tracking. Therefore, the BCA information is recorded on the RE layer 40 that is the L0 layer in a format that can be more easily identified as compared to the prepit used in the ROM layer.

Further, in the optical information recording medium 1, the area B is provided on an inner circumference that is on an inner side as compared to the area A. In other words, the BCA is provided in the vicinity of the inner circumference of the optical information recording medium 1. Accordingly, as compared to a case where the BCA is provided in the vicinity of an outer circumference of the optical information recording medium 1, it is possible to reduce an amount of record of the BCA information recorded on the optical information recording medium 1. Therefore, it becomes possible to reduce a time for recording the BCA information on the optical information recording medium 1.

An address of the RE layer 40 (rewritable layer) is recorded by arranging a groove provided along the RE layer 40 to meander along a direction of a substrate surface. An address of the ROM layer 20 is recorded by use of prepits having depressions and protrusions provided on the ROM layer 20.

Here, on the RE layer 40, in general, a groove is provided for preventing, in recording information, interference between record marks that are adjacent in a radial direction and for precisely reproducing information. Accordingly, for recording address information, it is the easiest to carry out recording by arranging the groove that is provided on the rewritable layer, to meander along the substrate surface direction (hereinafter, referred to as wobbling). Meanwhile, providing a prepit on the groove or on a part of the groove increases production cost because processing operation becomes complex.

Similarly, information is recorded on the ROM layer 20 by use of prepits that are generally made of depressions and protrusions. Therefore, for the same reason as described above, for recording address information, prepits are provided and this can prevent an increase in production cost.

### (Conventional Problem)

Next, the following explains problems in recording BCA information in a conventional combination disc, with reference to (a) to (c) of Fig. 3. Here, in the explanation, results of BCA recording in two types of media shown below are used.
(a) of Fig. 3 is a schematic diagram illustrating a configuration of an optical information recording medium having the L0 layer and the L1 layer each made of a ROM layer. (b) of Fig. 3 is a schematic diagram illustrating a configuration of an optical information recording medium having an L0 layer and an L1 each made of a RE layer. Further, (c) of Fig. 3 is a schematic diagram illustrating a configuration of an optical information recording medium having an L0 layer is made of a RE layer and an L1 layer is made of a ROM layer. In other words, (c) of Fig. 3 shows a configuration of the optical information recording medium 1.

As shown in (a) of Fig. 3, an optical information recording medium 110 is configured to include a cover layer 10, a ROM layer 120, an intermediate layer 30, a ROM layer 140, and a substrate 50 which are stack in this order from a side of an entrance surface of reproduction light.

The cover 10 is made of UV curable resin (a refraction index of 1.50 at a reproduction light wavelength of 405 nm) having a thickness of 75 µm.

The ROM 120 is made of APC (AgPdCu) having a thickness of 9nm. A film of APC that forms the ROM layer 120 is formed on a surface of the intermediate layer 30 by a sputtering method.

The intermediate layer 30 is made of transparent UV curable resin (a refraction index of 1.50 at a reproduction light wavelength) having a thickness of 25 µm. Further, on a surface of this intermediate layer 30 on a side provided with the ROM layer 120, prepits including depressions and protrusions in accordance with information recorded in a specific shape in the ROM layer 120 are provided by a 2P method.

The ROM layer 140 is made of APC (AgPdCu) having a thickness of 17 nm. A film of the APC that forms the ROM layer 140 is formed on a surface of the substrate 50 by a sputtering method.

As the substrate 50, a polycarbonate disc substrate having a diameter of 120 mm and a thickness of 1.1 mm is used. This polycarbonate disc substrate has grooves.

As shown in (b) of Fig. 3, an optical information recording medium 200 is configured to include a cover layer 10, a RE layer (L1 layer) 220, an intermediate layer 30, a RE layer (L0 layer) 240, and a substrate 50 which are stacked in this order from a reproduction light entrance surface.

The cover layer 10 is made of UV curable resin (a refraction index of 1.50 at a reproduction light wavelength) having a thickness of 75 µm.

The RE layer (L1 layer) 220 is made of 6 thin-film layers. Though not shown, the 6 thin-film layers are a first protective film (Zns-SiO₂ having a thickness of 35 nm), a second protective film (ZrO₂ having a thickness of 5 nm), a recording layer (GeTe-Sb₂Te₃ having a thickness of 6 nm), a third protective film (ZrO₂ having a thickness of 5 nm), a semi-transparent film (APC (AgPdCu) having a thickness of 10 nm), and a transmittance adjustment film (Tio₂ having a thickness of 19 nm) which are provided in this order from a reproduction light entrance side.

The intermediate layer 30 is made of transparent UV curable resin (a refraction index of 1.50 at a reproduction light wavelength) having a thickness of 25 µm. Further, on a surface of this intermediate layer 30 on a side provided with the RE layer (the L1 layer) 220, grooves are provided by a 2P method.

The RE layer (L0 layer) 240 is formed by stacking 7 thin-film layers by sputtering. Though not shown, more specifically, these 7 thin-film layers are a first protective film (Zns-SiO₂ having a thickness of 35 nm), a second protective film (ZrO₂ having a thickness of 5 nm), a recording layer (GeTe-Sb₂Te₃ having a thickness of 10 nm), a third protective film (ZrO₂ having a thickness of 5 nm), a fourth protective film (ZnS-SiO₂ having a thickness of 35 nm), a fifth protective film (ZrO₂ having a thickness of 5 nm), and a reflective film (APC (AgPdCu) having a thickness of 20 nm) which are provided in this order from a reproduction light entrance side.

As the substrate 50, a polycarbonate disc substrate having a diameter of 120 mm and a thickness of 1.1 mm is used. This polycarbonate disc substrate has grooves.

For measuring a power required for BCA recording onto the L0 layer in a dual-layer medium whose L0 layer is the ROM layer 140 by using the optical information recording medium 110, a BD-RE BCA recording device (fabricated by Pulstec Industrial Co., Ltd.; ODI-1000) including a semiconductor laser that can emit laser light having a wavelength of 808 nm was used as a recording/reproducing device. In the BD-RE BCA recording device, BCA recording onto the ROM layer 140 of the optical information recording medium 110 was carried out while laser power was varied.

However, even at 2W (linear velocity of 3 m/s in BCA recording) that was the maximum output of the above-described BD-RE BCA recording device, BCA recording onto the ROM layer 140 that was the L0 layer of the optical information recording medium 110 was not possible.

Then, by using the BD-RE BCA recording device, at 2W (linear velocity of 3 m/s in BCA recording) that was the maximum output, BCA recording onto the RE layer 240 that was the L0 layer of the optical information recording medium 200 was carried out and a surface of the optical information recording medium 200 was visually checked. Fig. 4 shows a result of this check.

Fig. 4 is an explanatory diagram showing a condition of an experimental result of BCA recording onto the optical information recording medium 200. Fig. 5 is a graph showing a result of measurement of a thickness of the cover layer 10 that forms a surface of the optical information recording medium 200 which measurement was carried out along an arrow indicated as a measured position in Fig. 4.

Regarding the arrow showing the measured position in Fig. 4, a leftward direction of a sheet of drawing indicates a direction to an inside diameter of the optical information recording medium 200 and a rightward direction of the sheet of drawing indicates a direction to an outer circumference of the optical information recording medium 200. In Fig. 5, a horizontal axis shows a measured position on the optical information recording medium 200 and a vertical axis shows a thickness of the cover layer 10 that forms a surface of the optical information recording medium 200.

Further, a position indicating an origin in Fig. 4 shows a position at which the measured position of the horizontal axis of Fig. 5 is "0". The direction to the inside diameter indicated by the arrow indicating the measured position in Fig. 4 indicates a negative direction as the measured position in Fig. 5. Meanwhile, the direction to the outer circumference indicated by the arrow showing the measured position in Fig. 3 shows a positive direction as the measured position in Fig. 5.

As shown in Fig. 4, it was visually observed that a BCA recording position where the BCA recording was carried out on the optical information recording medium 200 had changed in color.

Further, it is clear from Fig. 5 that in the vicinity of the measured position at "-1", a thickness of the cover layer 10 increased. As described above, as is clear from results of Figs. 4 and 5, the thickness of the cover layer 10 increased in a radial position at which the BCA recording was carried out onto the optical recording medium 200.

It is considered that this increase occurred due to peeling-off of the RE layer 220 from the cover layer 10 in the L1 layer.

Further, for a check, focusing search onto the L0 layer was carried out at the above radius position by use of ODU-1000 that is a BD evaluating apparatus fabricated by Pulstec Industrial Co., Ltd. As a result, it was found that focusing was not possible.

The focusing became impossible in this way is considered as follows. That is, peeling-off of the above-described cover layer 10 hinders focusing onto the RE layer 240 that is the L0 layer. In other words, when the cover layer 10 peels off, it becomes impossible to reproduce information on the L0 layer.

Therefore, in a dual-layer optical information recording medium whose L0 layer is a ROM layer and whose L1 layer is a RE layer, BCA recording cannot be carried out without peeling-off of a cover layer. Therefore, on the dual-layer optical information recording medium whose L0 layer is a ROM layer and whose L1 layer is a RE layer, substantially, BCA recording is impossible.

In addition, the BCA recording onto the ROM layer needs to be carried out at a higher laser power in the case of an optical information recording medium having a larger number of layers. Accordingly, for making it possible to share a recording/ reproducing device with other types of media, the above result indicates that the L0 layer should not be a ROM layer in a case where BCA recording is carried out on the L0 layer in a combination disc of a BD type in which both a RE layer and a ROM layer are present.

Note that the RE layer (L1 layer) 220 has a configuration that is generally used for an L1 layer of dual-layer BD-RE discs. Further, even if the configuration of the RE layer (L1 layer) 220 is arranged in another configuration, there will not be a large difference in absorbing light and generating heat and accordingly, a result will not change.

In other words, in a BD type combination disc in which both a RE layer and a ROM layer are present, the L0 layer is required to be always a RE layer.

Further, as shown in (c) of Fig. 3, an optical information recording medium 1 was fabricated as a BD type combination disc in which a RE layer 40 was provided as an L0 layer and a ROM layer 20 was provided as an L1 layer. Then, BCA recording was carried out on the RE layer 40 that was the L0 layer. As a result, it was found that the BCA recording could be carried out without any problem. In other words, it was found that no problem such as peeling-off of a cover layer at a position where the BCA recording was carried out did not occur as a result of providing the RE layer 40 as the L0 layer and the ROM layer 20 as the L1 layer as in the optical information recording medium 1.

### (Prepit Recording Format)

Next, the following explains a format of a prepit or a record mark formed on information recording layers (ROM layer and RE layer).

Fig. 6 is a schematic diagram illustrating a ROM layer in an in-pit recording format. Fig. 7 is a schematic diagram illustrating a RE layer of an on-groove recording format. Fig. 8 is a schematic diagram illustrating a ROM layer of an on-pit recording format.

In the present embodiment, as shown in Fig. 6, in the ROM layer 20 of the optical recording medium 1, information is recorded in the in-pit recording format in which prepits 21 are formed so as to be depressions with respect to a light (reproduction light) entrance surface of the ROM layer 20. This makes it possible to prevent damage to the ROM layer 20 in the optical information recording medium 1 that is a combination disc, for a reason described below.

For explaining the reason why damage to the ROM layer 20 can be prevented by formation of the prepits 21 in the in-pit recoding format, first, the following explains that damage to a ROM layer occurs in a configuration other than the above-described configuration (in other words, a configuration of a combination disc in which prepits are formed in the on-pit recording format in a ROM layer).

On the ROM layer on which prepits are formed in the on-pit recording format, prepits 121 are formed so as to be protrusions with respect to a light (reproduction light) entrance surface of the ROM layer 120, as shown in a ROM layer of Fig. 8.

In general, in one standard of optical discs, one information format is used for address information indicative of a location where information is recorded, regardless of disc types such as ROM, R, RW, RE, or the like. This is for simplifying a mechanism of a recording/reproducing device for recording/reproducing information on/from an optical disc.

Here, a recording/ reproducing device of the optical information recording medium 1 includes a device that carries out both recording and reproduction, a device that carries out only recording, and a device that carries out only reproduction.

For example, in a BD-RE disc, for increasing a speed for detecting address information, the address information is recorded in the form of a record mark simultaneously as information is recorded in the form of a record mark. Accordingly, in a RE layer (rewritable layer) of a combination disc, it is better to follow the same format. This makes it possible to simplify a mechanism of a recording/reproducing device for a combination disc.

Further, in the combination disc, it is desirable for reducing cost that a stamper for a ROM layer can also be used as a stamper for a ROM disc (an optical disc whose information recording layer is made of only a ROM layer).

Therefore, in a desirable combination disc, identical address information is present in both the ROM layer and the RE layer in a state where information (record mark) is recorded on the RE layer. This also applies to the optical information recording medium 1 according the present embodiment. In both of the ROM layer 20 and the RE layer 40, identical address information is present.

Here, on the RE layer 40, a plurality of grooves that are protrusions and gaps between the plurality of grooves which gaps are depressions, record marks 49 are formed on the grooves 48.

In the above configuration, for example, in a case where a pitch between grooves of the RE layer is narrow, for example, at 0.32 µm as in the case of a BD-RE disc, the protrusions (on grooves) and the depressions (between grooves) are not equivalent for incident light. As a result, when a record mark is recorded in a depression, the incident light goes over a wall between the depression and an adjacent protrusion, and reaches the adjacent protrusion. This becomes a cause of crosslight.

Therefore, on the RE layer having a narrow track pitch that is narrower than the above-described pitch, inevitably, recording/ reproduction in an on-groove recording format in a configuration in which the grooves are protrusions (a configuration in which a record mark is provided to a protrusion) becomes essential.

Accordingly, it is expected that the above condition applies to the RE 40 in the optical information recording medium 1 that is a combination disc. In other words, as shown in Fig. 7, recoding/reproduction is carried out on the RE layer 40 in the on-groove recording format in a configuration in which the grooves 48 are protrusions (a configuration in which a record mark 49 is provided to a protrusion).

In this way, in a reproducing device for a combination disc, in a case where address information on the RE layer is to be reproduced, the reproduction of the information is carried out in a setting that recording has been carried out in the on-groove recording format.

Here, in the combination disc, when layer jump is carried out from the ROM layer to the RE layer on which the record mark is recorded as described above, focusing onto the RE layer is not always guaranteed.

However, in a case where, like the ROM layer 120 shown in Fig. 8, the ROM layer is in the on-pit format, it is possible to perform tracking on the ROM layer 20 by DPP that is a general tracking method for a RE layer even when layer jump is carried out onto the RE layer in which the information is recorded as described above and the ROM layer 120 is focused in error.

This is for the following reason. In the DPP that is a general tracking method for the RE layer, a push-pull polarity is positive. Further, recording/reproduction of information can be executed by a tracking method whose push-pull polarity is positive, on both the RE layer in which the record mark is recorded in the on-groove recording format and the ROM layer in which prepits are formed in the on-pit recording format.

Accordingly, by only reproducing address information of a combination disc such as the optical information recording medium 1 in which identical address information is recorded in both the ROM layer 20 and the RE layer 40, whether the address information is recorded in the ROM layer 20 or the RE layer 40 is not clear. Accordingly, in the case of a combination disc including the RE layer in which the record mark is recorded in the on-groove recording format and the ROM layer in which the prepits are formed in the on-pit recording format, which one of the ROM layer and the RE layer is focused is be clear in an recording/reproducing device for recording/reproducing information on/from the combination disc.

Therefore, for example, in the recording/reproducing device, an erroneous judgment such that the RE layer is focused may be made even though, in the reality, the ROM layer of the combination disc is focused. As a result of such an erroneous judgment, information in the ROM layer may be rewritten.

In general, in a recording/ reproducing device, a recording power (power of laser light for recording information) is much greater than a reproducing power (power of laser light for reproducing information).

Therefore, the ROM layer dedicated to reproduction is irradiated with laser light having a power higher than expected. As a result, in the case of a combination disc, like the ROM layer 120, in which information is recorded in the on-pit recording format, damage to the ROM layer tends to occur at a higher possibility. In this way, in the combination disc in which information is not recorded in the in-pit recording format on the ROM layer, it is assumable that damage to the ROM layer occurs.

Next, the following explains a reason why the damage to the ROM layer 20 can be prevented in the optical information recording medium 1.

In the optical information recording medium 1 according to the present embodiment, the prepits 21 on the ROM layer 20 are formed in the in-put recording format. From the prepits 21 formed in the in-pit recording format in this way, it is possible to read out information by a tracking method whose push-pull polarity is negative.

In other words, information is recorded by use of the prepits 21 on the ROM layer 20 in a recording format whose push-pull polarity obtained at the time when information provided in the ROM layer 20 is reproduced is negative.

Accordingly, in a recording/reproducing device for recording/reproducing information on/from the optical information recording medium 1, the address information on the ROM layer 20 cannot be reproduced by tracking the ROM layer 20 at a push-pull polarity (positive) corresponding to information recording on the RE layer 40 in the on-groove recording format. This is because the recording format of the prepits on the ROM layer 20 is the in-pit recording format.

In other words, erroneous information cannot be rewritten on the ROM layer 20. This means that, even in a case where the ROM layer 20 is focused in error, damage to the ROM layer 20 can be prevented due to the configuration of the present invention.

Note that a phrase that a polarity of a push-pull signal is negative is a general expression for a person skilled in the art. This phrase means that, in a case where jump to an inner circumference occurs from a track from which information of the prepits is reproduced, levels of the push-pull signal are obtained in the order of 0, negative, 0, positive, 0 in a reproducing device. In this reproducing device, a light receiving section for receiving a reproduction signal is divided into two parts on an inner circumference and on an outer circumference, and the push-pull signal is calculated by subtracting a voltage obtained from one part of the light receiving section on an inner circumference side from a voltage obtained from the other part of the light receiving section on an outer circumference side.

### (Track Path)

The following explains a track path of the optical information recording medium 1.

(a) and (b) of Fig. 9 are explanatory diagrams of an opposite track path. (a) of Fig. 9 is an explanatory diagram showing a tracking path direction of an L0 layer in a case where the L0 layer is viewed from a light entrance surface. (b) of Fig. 9 is an explanatory diagram showing a tracking path direction of an L1 layer in a case where the L1 layer is viewed from the light entrance surface.

(a) and (b) of Fig. 10 are explanatory diagrams of a parallel track path. (a) of Fig. 10 is an explanatory diagram showing a tracking path direction of an L0 layer in a case where the L0 layer is viewed from a light entrance surface. (b) of Fig. 10 is an explanatory diagram showing a tracking path direction of an L1 layer in a case where the L1 layer is viewed from the light entrance surface.

(a) of Fig. 11 is an explanatory diagram illustrating a state of recording/ reproduction of information in the case of the opposite track path. (b) of Fig. 11 is an explanatory diagram illustrating a state of recording/ reproduction of information in the case of the parallel track path.

In general, in a recording dual-layer optical information recording medium, the opposite track path is employed. In this opposite track path, for example, in a case where a large amount of information is continuously recorded, first, recording of information starts from an inner circumference of the L0 layer. Then, after recording up to an outermost circumference of the L0 layer is completed, recording onto the L1 layer starts. In a case where an opposite track path in which the track path direction of the L1 layer is arranged to be from an outer circumference to an inner circumference in the above case, layer jump to the L1 layer is possible and recording can be continued without a large shift in a radial direction of a pickup.

Meanwhile, in the case of the parallel track path, recording is started from an inner circumference of the L0 layer. Then, after recording up to the outermost circumference of the L0 layer is completed, recording onto the L1 layer starts. However, the track path direction of the L1 layer is arranged to be from the inner circumference to an outer circumference. Accordingly, in the case of the parallel track path, a large shift in a radial direction of the pickup occurs. Therefore, in general, a recording time can be shortened in the opposite track path as compared to the parallel track path.

Further, the same applies to a dual layer optical recording medium dedicated to reproduction. Accordingly, in general, the opposite track path is employed also in the dual layer optical information recording medium dedicated to reproduction.

On the other hand, in a combination disc in which the L0 layer is the RE layer and the L1 layer is the ROM layer, it is desirable that the RE layer and the ROM layer takes the parallel track path.

That is, in the optical information recording medium 1, the track path direction of the RE layer 40 that is the L0 layer is arranged to be from the inner circumference to the outer circumference and the track path of the ROM layer 20 is the parallel track path.

Further, it is preferably that in the optical information recording medium 1, preferably, a read-in area of the ROM layer 20 is provided to an inner circumference section on an inner side of the area A (see Fig. 2) in which content or the like is recorded.

This is because the optical information recording medium 1 does not record information up to the L1 layer in continuous recording. Even when information recorded on the optical recording medium 1 is reproduced, a supplemental information of the RE layer 40 is used as appropriate in reproducing the information recorded on the ROM layer 20 in a case where the optical information recording medium 1 is used for replacing outdated data on the ROM layer 20 described above by recording, onto the RE layer 40, updated data obtained at the time when net connection can be established. Therefore, originally, the optical information recording medium 1 cannot take a method in which continuous reproduction of information from the ROM layer 20 to the RE layer 40 is carried out.

Further, a capacity of the content on the ROM layer 20 never coincides with the maximum capacity of the ROM layer 20. In general, the capacity of the content is smaller than the maximum capacity of the ROM layer 20.

In a case where the track path direction of the ROM layer 20 as the L1 layer is arranged to be from the outer circumference to the inner circumference (in the case of the opposite track path) in the above-described case, the read-in area for obtaining information for reproducing information from the ROM layer 20 should be in an uppermost stream in the track path direction. This is for making it possible to reproduce content immediately after reproduction of information recorded in the read-in area. Accordingly, in the case of the opposite track path, in the ROM layer 20, the read-in area is provided to an outer circumference section while a section on an inner circumference side becomes blank.

Here, in the read-in area, mainly, medium information relating to the optical information recording medium is recorded. The medium information includes medium type information, reproduction condition information, recording condition information, a last sector number information, and/or the like.

The medium type information is information related to type information such as R, RE, and/or ROM (in the present embodiment, a combination of the ROM layer and the RE layer) and the number of layers. The reproduction condition information is information such as a recommended reproduction laser power, linear velocity, and/or the like. The recording condition is information such as a recommended reproduction laser power, a recommended recording strategy, and/or the like. In addition, the last sector number information is information indicative of a recorded area on the ROM layer.

However, in general, in a case where a recording/reproducing device makes an access to the read-in area of the optical information recording medium, the access cannot be made unless the read-in area of the optical information recording medium has a certain degree of width in a radial direction. This is because there is a limitation to preciseness in shift of the pickup by a servomotor.

Further, there is not much disc information to be recorded in the read-in area. Accordingly, the disc information is repeatedly recorded. This is for allowing quick reproduction of the information regardless of a position from which reproduction starts on one circumference. Therefore, in a case where the read-in area having an identical width in the radial direction is to be provided, the number of repetition of record of disc information is remarkably larger in the outer circumference section than in an inner circumference section.

That is, in a case where information of an identical capacity is to be recorded, a time for fabricating a stamper for an arrangement in which the track path direction is arranged to be from the outer circumference to the inner circumference becomes longer than a time for fabricating a stamper for an arrangement in which the track path direction is arranged to be from the inner circumference to the outer circumference.

Note that a size of pits used in the current BD-ROM disc is very small. Accordingly, cutting at a DVD cutting level cannot be applied but cutting by use of EBR or the like is required. Therefore, it takes a very long time for fabricating a stamper.

In general, in a case where a stamper is fabricated by EBR (electron beam exposure), exposure is carried out on a corresponding resist by use of an electron beam. Accordingly, the resist applied on a master disc needs to be irradiated with a sufficient electron beam. Therefore, a linear velocity for cutting needs to be very slow. For example, for fabricating a stamper for a ROM having a capacity of 25 GB for BD, a two-day processing operation time is required. In this way, fabrication of a stamper by EBR requires a processing operation time that is very long beyond comparison with conventional fabrication of a stamper.

In other words, in a case where a stamper is fabricated so that the track path direction is arranged to be from the outer circumference to the inner circumference, it takes an enormous time. Consequently, cost for fabricating the ROM layer becomes very expensive.

However, the track path direction of many L0 layers are arranged to be from the inner circumference to the outer circumference and the BCA is provided to the inner circumference for sharing a recording/ reproducing device with other media. Accordingly, it can be assumed that there is a case where, immediately after reproduction of information from the BCA, an access is made to the RE layer and information is recorded. Therefore, the track pass direction of the L0 layer is preferably arranged to be from the inner circumference to the outer circumference.

Consequently, in a BD type combination disc in which both the RE layer and the ROM layer are present, preferably, the RE layer and the ROM layer are arranged to have a configuration of the parallel track path.

In other words, it is preferable that, as in the optical information recording medium 1, the track path direction of the RE layer 40 as the L0 layer is in a direction from the inner circumference to the outer circumference and the track pass direction of the ROM layer 20 is arranged to have the parallel track path.

In addition, even in a case where more of the RE layers and the ROM layers are mixedly present, for the same reason, it is preferable that the track path direction of the ROM layer provided in a position farthest from the cover layer among the plurality of ROM layers is in parallel with the track path direction of the RE layer provided in a position farthest from the cover layer among information recording layers provided in the optical information recording medium.

### (Information Recording/ Reproducing Device)

Next, the following explains a device for recording/ reproducing optical information according to the present embodiment, with reference to Fig. 12.

As shown in Fig. 12, the optical information recording/ reproducing device (device for recording/reproducing information on/from an optical information recording medium) 70 is a device for recording/reproducing information on/from the optical information recording medium 1.

As shown in Fig. 12, the optical information recording/ reproducing device 70 includes a control section 72, a switching mechanism (switching means) 73, an address determination mechanism 74, a pickup control section 75, a data reproducing circuit 76, and a pickup 71.

As shown in Fig. 12, the optical information recording/ reproducing device 70 is arranged so that the pickup 71 is moved to a track (not shown) of a spinning optical information recording medium 1.

The control section 72 sets a recording condition or a reproducing condition via a laser drive circuit (not shown) and causes a portion for recording/reproducing in the optical information recording medium 1 to be irradiated with a laser beam from the pickup 71 for recording/reproduction. As a result, the address information of the optical information recording medium 1 is reproduced.

Further, the optical information recording/reproducing device 70 includes the switching mechanism 73 capable of switching a method for reproducing the address information on the RE layer 40 of the optical information recording medium 1 (hereinafter, referred to as a RE layer address information reproducing method) and a method for reproducing address information on the ROM layer 20 (hereinafter, referred to as a ROM layer address information reproducing method).

The switching mechanism 73 is included in the control section 72 and switches an input signal directed to the address determination mechanism, according to an instruction within the control section.

Because the optical information recording/reproducing device 70 includes the switching mechanism 73, the optical information recording/reproducing device 70 can reproduce address information from a RE layer and a ROM layer of a combination disc whose cost is suppressed and in which combination disc both the RE layer and the ROM layer are present in one optical information recording medium as in the optical information recording medium 1. Therefore, it is possible to favorably record/reproduce address information on/from the RE layer and the ROM layer.

Further, the switching mechanism 73 switches between the RE layer address information reproducing method and the ROM layer reproducing method in accordance with a type of a target layer, when the optical information recording/ reproducing device 70 changes a layer on/from which the optical information recording/ reproducing device 70 is recording/reproducing information on the optical information recording medium 1.

In this way, when the optical information recording/reproducing device 70 changes a layer on/from which the optical information recording/reproducing device 70 is recording/reproducing information (carries out layer jump), the address information reproducing method is switched. Thereby, the optical information recording/reproducing device 70 can quickly check address information and determine a current position. In addition, the optical information recording/reproducing device 70 also can quickly determine that the layer jump to a target layer was not successful in a case where the address information cannot be reproduced.

Furthermore, the optical information recording/reproducing device 70 also can reproduce information recorded on the ROM layer 20 by laser power that makes it possible to favorably reproduce information recorded on the RE layer 40 of the optical information recording medium 1.

In general, it is more difficult to increase a reflectance of the RE layer as compared to that of the ROM layer, due to a material constituting the RE layer. Therefore, it is difficult to obtain a sufficient modulation factor by recording. Accordingly, for example, in a dual-layer RE disc, reproduction is carried out by use of reproduction laser power that is higher than reproduction layer power used for a dual-layer ROM layer. This is for obtaining a favorable signal characteristic of the L0 layer in particular.

In a dual-layer combination disc having a ROM layer as the L0 layer which dual-layer combination disc has a different structure from a structure of the optical information recording medium 1 of the present embodiment, there is no light loss in the RE layer as the L1 layer. Accordingly, a preferable reproduction characteristic can be obtained by laser power at a level for reproducing information on the ROM layer.

However, in the combination disc having the structure of the optical information recording medium 1 of the present embodiment, light loss always occurs. Accordingly, a preferable reproduction characteristic cannot be obtained unless information on the RE layer 40 is reproduced by use of laser power that is higher than laser power for reproducing information on the ROM layer 20.

Therefore, for the RE layer 40 provided as the L0 layer, the laser power needs to be set higher than the laser power for reproducing information on a general ROM layer 20. In this case, switching laser power by layer jump or the like is too much load for the recording/reproducing device. Therefore, in such a case, the laser power needs to be identical.

Accordingly, as described above, by reproducing information recorded on the ROM layer 20 by use of laser power that makes it possible to preferably reproduce information recorded on the RE layer of the optical information recording medium 1, the optical information recording/reproducing device 70 can make a reproduction characteristic of the L0 layer preferable and also can reduce load on the optical information recording/reproducing device 70 itself.

The present invention is not limited to the description of the embodiments above, but may be altered by a skilled person within the scope of the claims. An embodiment based on a proper combination of technical means disclosed in different embodiments is encompassed in the technical scope of the present invention.

As described above, an optical information recording medium of the present invention includes a substrate: a plurality of information recording layers from which information can be read out by reproduction light; an intermediate layer for separating each of the plurality of information recording layers; and a light transmitting layer provided in a position farthest from the substrate, the plurality of information recording layers including a layer allowing only readout of information and a rewritable layer including an area where information is rewritable, the rewritable layer including an area where information is rewritable, being an information recording layer provided in a position farthest from the light transmitting layer and also being a recording layer of disc type identification information and an individual identification number recorded in a format allowing easier determination as compared to an information recording format used for the layer allowing only readout of information by use of light irradiation.

Here, the disc type identification information is information for identifying a disc type. In other words, the disk type identification information shows the number of information recording layers provided in a disc, and/or types (ROM, R, RE, etc.) of information recording layers provided in the disc. The disk type identification information also shows locations of a layer allowing only readout of the information (hereinafter, referred to as a ROM layer) and a rewritable layer including an area in which the information is rewritable, among the plurality of information recording layers. Further, the disc type identification information is information for identifying types of the optical information recording medium.

The individual identification number is a number for identifying an individual of the optical information recording medium. The individual identification number is preferably recorded on the optical information recording medium at the time when BAC recording is carried out. By using the individual identification number as appropriate, it is possible to prevent improper dubbing onto an RE layer or the like.

According to the above configuration, the disc type identification information and the individual identification information are recorded in an information recording layer (hereinafter, referred to as an L0 layer) provided in a position farthest from the light transmitting layer.

Accordingly, it becomes possible to set in advance, in a reproducing device for reproducing the disc type identification information and the individual identification information, which layer among the plurality of information recording layers the disc type identification information and the individual identification information are recorded on. This makes it possible to shorten a time for causing the reproducing device to specify the layer on which the disc type identification information and the individual identification information are recorded among the plurality of information recording layers. Further, it becomes easy to share one reproducing device among optical information recording media of various disc types.

Furthermore, according to the above configuration, the information recording layer provided in the position farthest from the light transmitting layer is a RE layer. That is, according to the above configuration, the RE layer is disposed as the L0 layer.

Therefore, it becomes possible to prevent peeling-off of the RE layer for BCA recording in the ROM layer from the intermediate layer, the transparent layer, or the like that is provided above or below the RE layer at the time when BCA information is recorded, which peeling-off occurs in a case where the ROM layer is provided as the L0 layer. As a result, it is possible to cause a reproducing device or the like to properly reproduce the disc type identification information, the individual identification information, and/or the like which been subjected to BCA recording onto the L0 layer.

In this way, according to the above configuration, on a disk that is a BD-format multi-layer disc whose record capacity can be more easily increased as compared to the DVD type and also is a combination disc, there are disc type identification information and an individual identification number (information recorded in BCA recording) recorded in a format that can be more easily determined as compared to an information recording format used by a user for the information recording layer (L0) that is far from a light entrance surface. In addition, in the configuration, the RE layer is provided.

According to the above configuration, a disc type can be easily checked in the recording/ reproducing device. This makes it possible to share one recording/reproducing device with other types of optical discs. Further, production of the disc becomes easy. In addition, it also becomes possible to obtain an optical information recording medium in which outdated data on the ROM layer can be replaced by recording, on the RE layer, updated data obtained at the time when internet connection can be established.

In the optical information recording medium of the present invention, preferably, the format allowing determination is a format for recording information by irradiating the information recording layer with pulse laser light and forming a stripe having a width in a unit of µm.

According to the above configuration, disc type identification information and individual identification information can be read out by the reproducing device for reading out the disc type identification information and the individual identification information, even in a case where a position of a focus or irradiation of reproduction light is more or less shifted out of a proper position in a radial direction at the time of reproduction.

Further, in the optical information recording medium of the present invention, a radial position of an area B that does not require tracking in reproducing information is preferably provided to an inner circumference on an inner side of an information recording area A that requires tracking for reproduction of information, in which radial position the disc type identification information and the individual identification number are recorded.

According to the above configuration, the disc type identification information and the individual identification information are provided in the vicinity of an inner circumference of the optical information recording medium. Accordingly, as compared to a case where the disc type identification information and the individual identification information are provided on an outer circumference side of the information recording area, that is, in the vicinity of an outer circumference of the optical information recording area, it is possible to shorten a time for recording the disc type identification information and the individual identification information. Consequently, a capacity for recording information can be increased.

The optical information recording medium of the present invention is preferably configured such that: a track path direction of the information recording layer provided in the position farthest from the light transmitting layer is a direction from an inner circumference to an outer circumference; and a track path of the layer allowing only readout of information and provided in a position farthest from the light transmitting layer among layers allowing only readout of information is a parallel track path with respect to the track path direction of the information recording layer.

According to the above configuration, in production of a stamper required for producing the layer that allows only readout of information which layer is provided in the position farthest from the transparent layer among layers allowing only readout of information, cutting can be started from a position in the vicinity of the inner circumference. Accordingly, other than in a case where information is recorded all over the information recording area A, cutting becomes easier in regard to preciseness as compared to a case where cutting is started from a position in the vicinity of the outer circumference. Consequently, production cost can be reduced.

Further, the optical information recording medium of the present invention, preferably, the layer allowing only readout of information has a read-in area provided in an inner circumference section on an inner side of a content recording area.

According to the above configuration, medium information (information such as medium type information, reproduction condition information, last sector number information, etc.) recorded in the read-in area is provided in the vicinity of the inner circumference of the optical information recording medium. Accordingly, as compared to a case where such medium information is provided on an outer circumference side of the information recording area A, that is, in the vicinity of the outer circumference of the optical information recording medium, it is possible to record the medium information in the vicinity of the inner circumference in production of a stamper required for formation of the layer allowing only readout of information. This makes it possible to reduce a time for producing the stamper. Consequently, production cost can be reduced and an information record capacity can be further increased.

The reason for the above is as follows. That is, in a case where the content information recorded in the information area A is to be reproduced, the medium information is required. Accordingly, the medium information needs to be quickly reproduced. For the quick reproduction, it is preferable that reproduction is possible without checking an address or the like. Therefore, for making it possible to quickly reproduce information regardless of a position on one circumference from which reproduction is started, identical information is recorded in a repeated manner in an area at a predetermined width in the radial direction (which width is determined by a preciseness of a servomotor or the like for moving a pickup in the radial direction, for example, a width in a unit of several hundred µm). On this account, if the medium information is provided in the vicinity of the outer circumference, a wider area is required and more information needs to be recorded.

In the optical information recording medium of the present invention, it is preferable that: an address on the rewritable layer is recorded by meandering a groove provided on the rewritable layer along a substrate surface direction; and an address of the layer allowing only readout of information is recorded by use of prepits made of depressions and protrusions provided on the layer allowing only readout of information.

Here, in the RE layer, in general, grooves are provided for preventing, in recording of information, interference between record marks adjacent to each other in the radial direction and for precise reproduction. Therefore, for recording address information, it is the easiest way to carry out recording by meandering, along a substrate surface direction, a groove that is provided in the rewritable layer (hereinafter, referred to as wobbling). Meanwhile, providing prepits on the grooves or on a part of the grooves makes a processing operation complex and thus increases production cost.

Similarly, information is recorded in the ROM layer by use of the prepits that are, in general, made of depressions and protrusions. Accordingly, for the above reason, in recording address information, it is possible to prevent increase in the production cost as compared to a case where the prepits are provided on the grooves or on a part of the grooves.

Further, in the optical information recording medium of the present invention, preferably, in the layer allowing only readout of information, information is recorded in an in-pit recording format forming a prepit as a depression with respect to a light entrance surface.

Here, in a case where a pitch of the grooves on the RE layer becomes narrower, the protrusions and the depressions are not equivalent for incident light. Accordingly, when recording is carried out with respect to a depression, incident light goes over a wall between the depression and an adjacent protrusion and reaches the adjacent protrusion, which becomes a cause of crosslight. Therefore, in the RE layer that inevitably has a narrow track pitch, recording/ reproduction in an on-groove recording format in which the grooves are protrusions is required.

Further, when layer jump from the ROM layer to the RE layer is carried out, the ROM layer may be focused in error.

In such a case, an address of the ROM layer cannot be reproduced by tracking the ROM layer by a push-pull polarity (positive) corresponding to information recording in the on-groove recording format on the RE layer. This is because the recording format of the prepits on the ROM layer is in an in-pit recording format.

In other words, wrong information rewriting on the ROM layer is not possible. Accordingly, even in a case where the ROM layer is focused in error, damage to the ROM layer can be prevented in the configuration of the present invention.

In this way, in the above configuration, it is possible to prevent damage to a layer allowing only readout of information in a combination disc.

Further, in the optical information recording medium of the present invention, preferably, information is recorded by use of a prepit in a recording format in which a polarity of a push-pull signal is negative, the push-pull signal being obtained in a case where information provided on the layer allowing only reproduction of information is reproduced.

Here, in a case where recording/ reproduction is carried out in the on-groove recording format in which the grooves on the RE layer is arranged to be protrusions, the push-pull polarity corresponding to information recording on the RE layer becomes positive.

Further, in the above configuration, on the ROM layer, information is recorded by use of the pre-pits in a recording format in which the polarity of the push-pull signal obtained in a case where the information is reproduced is negative.

Accordingly, even in a case where the ROM layer is focused in error at layer jump from the ROM layer to the RE layer, the address of the ROM layer cannot be reproduced by the push-pull polarity (positive) corresponding to the information recording in the on-groove recording format on the RE layer.

In other words, wrong information rewriting on the ROM layer is not possible. Accordingly, even in a case where the ROM layer is focused in error, damage to the ROM layer can be prevented in the configuration of the present invention.

In this way, in the above configuration, it is possible to prevent damage to a layer allowing only readout of information in a combination disc.

Note that a phrase that a polarity of a push-pull signal is negative is a general expression for a person skilled in the art. This phrase means that, in a case where jump to an inner circumference occurs from a track from which information of the prepits is reproduced, levels of the push-pull signal are obtained in the order of 0, negative, 0, positive, 0 in a reproducing device. In this reproducing device, a light receiving section for receiving a reproduction signal is divided into two parts on an inner circumference and on an outer circumference, and the push-pull signal is calculated by subtracting a voltage obtained from one part of the light receiving section on an inner circumference side from a voltage obtained from the other part of the light receiving section on an outer circumference side.

A device of the present invention for recording/reproducing information on/from an optical information recording medium, the device capable of recording/reproducing information on/from the optical information recording medium, the device includes: a switching mechanism capable of switching between a reproduction method for address information on the rewritable layer and reproduction method for address information on the layer allowing only readout of information in a case where an address on the optical information recording medium is to be reproduced.

Here, a device for recording/reproducing information on/from an optical information recording medium (recording/ reproducing device) includes a device that carries out both recording and reproduction, a device that carries out only recording, and a device that carries out only reproduction.

By including the switching mechanism, address information can be reproduced from a combination disc in which both the RE layer and the ROM layer are present in one optical information recording medium, as in the above-described optical information recording medium, and whose cost is suppressed. Therefore, each of address information on the RE layer and address information on the ROM layer can be preferably recorded/reproduced.

In the device of the present invention, preferably, the reproduction method for the address information is switched by the switching mechanism in accordance with a type of a target layer, when a layer on/from which recording/reproduction is being carried out is to be changed.

According to the above configuration, when the layer on/from which the information is recorded/reproduced is changed (layer jump is carried out), the device for recording/reproducing information on/from an optical information recording medium switches the method for reproducing an address. Thereby, the device can quickly check the address and determine a current position. Further, in a case where the address cannot be reproduced, the device for recording/ reproducing information on/from an optical information recording medium can quickly find that layer jump to a target layer was not successful.

In the device for recording/reproducing information on/from an optical information recording medium, preferably, information on the layer allowing only readout of information is reproduced by laser power that makes it possible to favorably reproduce information recorded on the information recording layer that is provided in the position farthest from the light transmitting layer.

In general, it is more difficult to increase a reflectance of the RE layer as compared to that of the ROM layer, due to a material constituting the RE layer. Therefore, it is difficult to obtain a sufficient modulation factor by recording. Accordingly, for example, in a dual-layer RE disc, reproduction is carried out by use of reproduction laser power that is higher than reproduction layer power used for a dual-layer ROM layer. This is for obtaining a favorable signal characteristic of the L0 layer in particular.

In a dual-layer combination disc having a ROM layer as the L0 layer which dual-layer combination disc is not the optical information recording medium of the present invention, there is no light loss in the RE layer as the L1 layer. Accordingly, a preferable reproduction characteristic can be obtained by laser power at a level for reproducing information on the ROM layer. However, in the optical information recording medium of the present invention, light loss always occurs. Accordingly, a preferable reproduction characteristic cannot be obtained unless information on the RE layer is reproduced by laser power that is higher than the lowest laser power required for reproducing information on the ROM layer.

Therefore, for the RE layer provided as the L0 layer, laser power needs to be set so that the laser power is higher than the laser power for reproducing information on the general ROM layer. In this case, switching laser power by layer jump or the like is too much load for the device. Therefore, in such a case, the laser power needs to be identical.

Therefore, the above configuration makes reproduction characteristic of information on the L0 layer preferable, and also makes it possible to reduce load on the device.

### Industrial Applicability

The present invention is applicable to a combination disc and a device for recording/reproducing information on/from the combination disc.

### Reference Signs List

1 optical information recording medium
10 cover layer (light transmitting layer)
20 ROM layer
21 prepit
30 intermediate layer
40 RE layer (rewritable layer)
48 groove
49 record mark
50 substrate
70 optical information recording/reproducing device (device for recording/ reproducing information on/from optical information medium
71 pickup
72 control section
73 switching mechanism

## Claims

1. An optical information recording medium comprising on a substrate:
a plurality of information recording layers from which information can be read out by reproduction light;
an intermediate layer for separating each of the plurality of information recording layers; and
a light transmitting layer provided in a position farthest from the substrate,
the plurality of information recording layers including a layer allowing only readout of information and a rewritable layer including an area where information is rewritable,
the rewritable layer including an area where information is rewritable, being an information recording layer provided in a position farthest from the light transmitting layer and also being a recording layer of disc type identification information and an individual identification number recorded in a format allowing easier detection as compared to an information recording format used for the layer allowing only readout of information by use of light irradiation.

2. The optical information recording medium as set forth in claim 1, wherein:
the format allowing easier determination is a format for recording information by irradiating the information recording layer with pulse laser light and forming a stripe having a width in a unit of µm and a length in a unit of µm to a unit of mm.

3. The optical information recording medium as set forth in claim 1, wherein:
a radial position where the disc type identification information and the individual identification number are recorded is provided to an inner circumference on an inner side of an information recording area that requires tracking for reproduction of information.

4. The optical information recording medium as set forth in any one of claims 1 to 3, wherein:
a track path direction of the information recording layer provided in the position farthest from the light transmitting layer is a direction from an inner circumference to an outer circumference; and
a track path of the layer allowing only readout of information and provided in a position farthest from the light transmitting layer is a parallel track path with respect to the track path direction of the information recording layer.

5. The optical information recording medium as set forth in claim 4, wherein:
the layer allowing only readout of information has a read-in area provided in an inner circumference section on an inner side of a content recording area.

6. The optical information recording medium as set forth in any one of claims 1 to 5, wherein:
an address on the rewritable layer is recorded by meandering a groove provided on the rewritable layer along a substrate surface direction; and
an address of the layer allowing only readout of information is recorded by use of prepits made of depressions and protrusions provided on the layer allowing only readout of information.

7. The optical information recording medium as set forth in any one of claims 1 to 6, wherein:
in the layer allowing only readout of information, information is recorded in an in-pit recording format forming a prepit as a depression with respect to a light entrance surface.

8. The optical information recording medium as set forth in any one of claims 1 to 6, wherein:
information is recorded by use of a prepit in a recording format in which a polarity of a push-pull signal is negative, the push-pull signal being obtained in a case where information provided on the layer allowing only reproduction of information is reproduced.

9. A device for recording/reproducing information on/from an optical information recording medium, the device capable of recording/reproducing information on/from the optical information recording medium as set forth in claim 6, the device comprising:
a switching means capable of switching between reproduction means for address information on the rewritable layer and reproduction means for address information on the layer allowing only readout of information in a case where an address on the optical information recording medium is to be reproduced.

10. The device as set forth in claim 9, wherein:
the reproduction means for the address information is switched by the switching means in accordance with a type of a target layer, when a layer on/from which recording/ reproduction is being carried out is to be changed.

11. A device for recording/reproducing information on/from an optical information recording medium, the device capable of recording/reproducing information on/from the optical information recording medium as set forth in any one of claims 1 to 8, wherein:
information on the layer allowing only readout of information is reproduced by laser power that makes it possible to favorably reproduce information recorded on the information recording layer that is provided in the position farthest from the light transmitting layer.
